# EUROPEAN PATENT APPLICATION

(11) **EP 1 439 631 A2**
(43) Date of publication of application: **21.07.2004**
(21) Application number: 04386001.4
(22) Date of filing: 08.01.2004
(51) Int. Cl.: H02K 53/00, F16H 3/08

(54) **Method and mechanism for the production of energy**

(30) Priority: 14.01.2003 GR 2003100013
(71) Applicant: Economidis Fotios, 46100 Thesprotia (GR)
(72) Inventor: Economidis Fotios, 46100 Thesprotia (GR)

(57) **Abstract**

The present invention relates to a method and a mechanism for the production of energy based in the simultaneous exploitation of an action exerted on a system and of the reaction being associated with that action, wherein the proposed method and mechanism succeed in producing energy with a controlled and adjustable with an absolute accuracy at a desired predetermined level, torque and power output. The device of the invention, as illustrated in Fig. 1, comprises an arrangement of flywheel units (3,4,5), an arrangement of fixedly mounted rings (6,7,8) and a system of wheels and other mechanical elements by means of which, following an initial power input to a driving gear connected to the flywheel (3), an arrangement of a plurality of sequentially engaged planet wheels activate an eventual circumferential arrangement of rotating wheels (23 a), the latter transmitting an increased torque to be used in the production of energy at the shaft (26) of a generator (17).

## Description

### THE FIELD OF THE ART

The present invention relates to the field of the art of methods, means and mechanisms for the production of energy at an extremely high efficiency and more specifically it proposes a method and a mechanism based in the simultaneous exploitation of an action exerted on a system and of the reaction being associated with that action, wherein the proposed method and mechanism succeed in producing energy with a controlled and adjustable with an absolute accuracy at a desired predetermined level, torque and power output.

### THE PRIOR ART

The up today available scientific, technological, theoretical and applied research have not provided, designed, manufactured or made commercially available a device and method of operation thereof for the transmission of motion, same or similar to the device and method proposed in the present invention.

Thus the effort undertaken by humankind is broadly known worldwide nowadays for the optimum exploitation of existing and the recovery of new energy sources, since the energy problem has become a matter of decisive importance for the survival and the development of our planet. With the development of activities and the rise of the cultural level of human gender on earth, demand of energy permanently increases, whilst unfortunately at the same time the available reserves of conventional sources of energy are ever decreasing. Moreover the continuing exploitation of energy sources often leads to serious adverse effects on the environment. We might for example refer to the adverse effects from the products of combustion of hydrocarbons (greenhouse effect), from the operation of air conditioning equipment (destruction of the ozone layer), but also during the last decades with the proliferation and expansion of nuclear power stations, wherein possible accidents might often involve incalculable and non reversible damages. From the above briefly exposed state of affairs with regard to the energy problem it becomes obvious that there results a standstill in this sector and the need exists to find solutions that might guarantee the secure and unhindered development of human gender in our planet.

Unfortunately even in our days with the obvious environmental crisis, no coordinated and methodical research has been carried out for the designing of systems that would be capable of transmission of motion in a controlled adjustable manner with absolute precision for the production of torque and power and the employment thereof in achieving high efficiencies in power plants. On the contrary, a rather extensive unjustified research is been carried out with a scope of achievement of rather minimal percentage improvement of the efficiency of internal combustion engines, notwithstanding the fact that it is disputed by nobody that the energy sources consumed by these engines on the one hand are shortly expected to be exhausted, whilst their use cannot guarantee the sustainable development in our planet and on the other hand they are able in any case to irreversibly harm the planet taking into account the rapid rate of deterioration in the pollution of the environment.

It is therefore the object of the present invention to advantageously overcome the disadvantages and drawbacks of the prior art and propose a method and mechanism, the employment of which will lead to advantageously overcoming the disadvantages and drawbacks of the prior art and to ensuring the production of energy with a high efficiency, wherein the proposed method and mechanism are based on the theory of a simultaneous exploitation of the action exerted on a system and of the reaction produced thereby and wherein the proposed method and mechanism achieve the production of energy with controlled, adjustable with an absolute precision at a desirable predetermined level, parameters of torque and motive power.

Moreover, it is the object of the present invention to provide the proposed mechanism capable of being manufactured in conformity with the necessary requirements of specifications, size and output, with a long service life and minimal requirements of maintenance and low cost of manufacture and operation.

### SHORT DESCRIPTION OF DRAWINGS

The present invention will become obvious to those skilled in the art by reference to the accompanying drawings in which is portrayed an illustrative preferred embodiment of the invention.

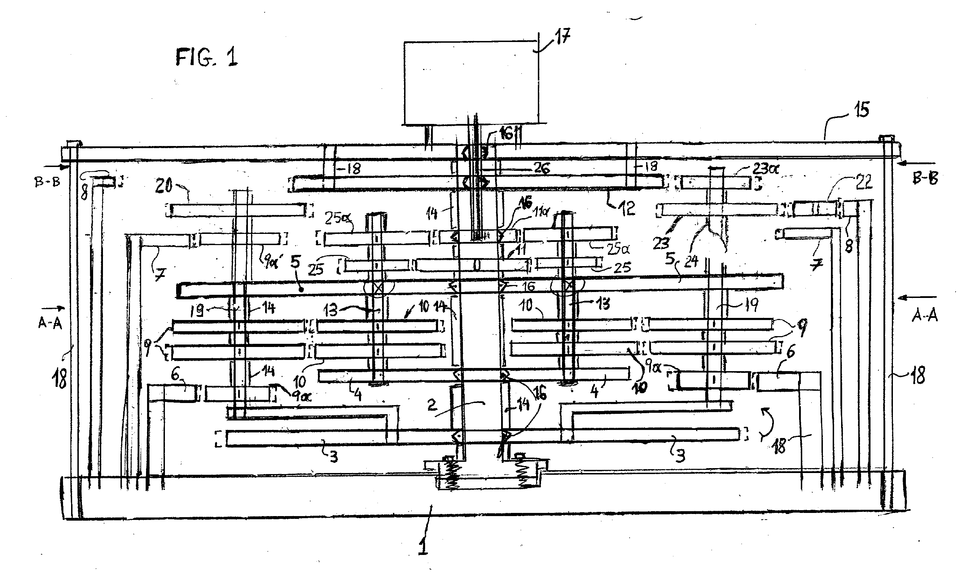

Fig. 1 shows a vertical section of the device of the invention where is presented the level of power input to the device (bottom), the level of the output of energy produced (top) as well as the intermediate system of wheels and the mode of engagement thereof.
Fig. 2 shows a planar view of the device of Fig. 1 across section A-A.
Fig. 3 shows a planar view of the device of Fig. 1 across section B-B.

The individual parts and elements of the device of the present invention are enlisted hereinbelow, at an order of numeration equivalent to their numeration in the accompanying drawings.
1. Basement of the device
2. Principal Shaft
3. First Divided flywheel
4. Second divided flywheel
5. Third divided flywheel
6. First internally toothed fixed ring.
7. Second internally toothed fixed ring.
8. Third internally toothed fixed ring.
9. Six double toothed wheels.
9a. Wheels engaged in the internal toothing of ring 6.
9a'. Wheels engaged in the internal toothing of ring 7.
10. Eight double toothed wheels.
11. First fixed wheel with teeth in the circumference thereof.
11 a. Wheel of transfer of energy in the generator shaft.
12. Second fixed wheel with teeth in the circumference thereof.
13. Shafts fixedly mounted in flywheel 4.
14. Spacers
15. Cover of the device.
16. Bearings
17. Generator
18. Pillars
19. Shafts fixedly mounted in the circumference of flywheel 3.
20. Upper wheel of shaft 19.
21. Wheel of transmission of motion engaged in wheel 20.
22. Wheel moved wheel 21 and engaged on the one hand in the perimeter of ring 8 and on the other hand in the wheel 23.
23. Bottom wheel of shaft 24.
23a. Wheel of smaller diameter than that of wheel 23 and coaxially overlying thereof.
24. Axis of wheels 23, 23a.
25. Wheel engaged in the externally toothed fixed wheel 11.
25a. Wheel overlying wheel 25 and engaged in wheel 11 a of transfer of energy in the generator shaft.
26. Shaft of the generator.

### DETAILED DESCRIPTION OF PREFERRED EMBODIMENTS

By reference to the accompanying drawings we will describe hereinafter an illustrative, preferred embodiment of the proposed device and of the method of operation thereof.

The device of the invention includes sequential steps of transformation of motion, constituted from flywheels, series of toothed wheels (gears) with suitably selected accessories, such as bearings, spacers, wedges, etc., all of which are arranged in the perimeter of a central principal shaft 2.

The device of the invention is put in operation when by means of any desirable, conventional and known in the prior art, suitable and available mode and means, is provided a certain quantity of initial energy, e.g. from the power supplying motor that is not depicted.

Three sequential flywheel units 3, 4, 5 are mounted along the principal central axis 2 of the device in between the bottom basement 1 and the upper cover 15 thereof. Three rings 6, 7 and 8 are mounted, again from the bottom to the top of central shaft 2, having progressively increasing diameters, so that the diameter of fixedly mounted ring 8 is bigger than that of ring 7 and the diameter of ring 7 is bigger than that of ring 6. The three rings are mounted in the circumference of the device, being fixedly mounted via suitable pillars 18 in the basement 1 of the device. All three fixedly mounted rings 6, 7 and 8 are provided with a circumferential internal toothing.

The power supply motor that is not portrayed in the drawings is engaged with the denture of the first bottom flywheel 3. The kinetic energy is thereby transferred from flywheel 3 on the one hand in the series of double toothed wheels 9 that are pivotally mounted within suitable bearings and on the other hand in the shafts 13 of flywheel 4 extending on either side of the principal shaft 2 of the device.

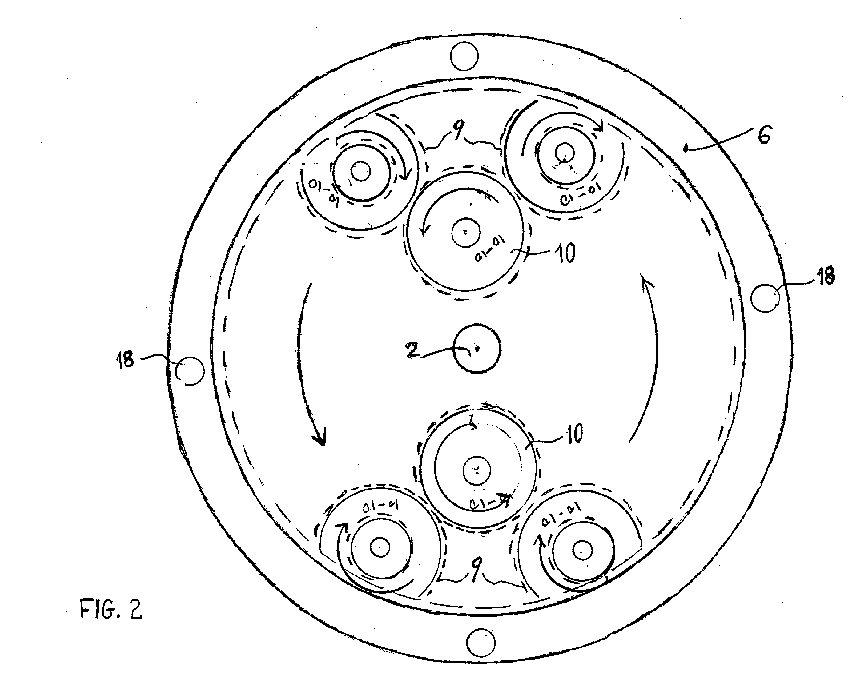

The provision of the series of double toothed wheels 9 is such that in each pair of wheels 9 corresponds an underlying wheel 9a of smaller diameter, wherein the wheels 9a are engaged in the circumferential first fixed ring 6 and, as it appears in Fig. 2, two such series of double toothed wheels 9 are arranged in diametrically opposing positions in the perimeter of ring 6. Alternatively, so much at this level of the device of the invention and accordingly at subsequent levels thereof, according to another preferred embodiment of the invention it is possible to employ three such series of double toothed wheels 9 arranged in the circumference and spaced at an angular distance of 120°.

Via the circumferential engagement of toothed wheels 9a in the fixed ring 6 that results, besides from the rotation of wheels 9a around their individual axes, to their respective rotation in the circumference of fixed ring 6, the motion is transferred in the wheels 10 that are located in the shafts 13 fixedly mounted onto the flywheel 4 on the one hand and are simultaneously located in the coaxially overlying wheels 25 and 25a.

Wheels 25 move in the circumference of the fixed wheel with external denture 11, whilst the wheels 25a engaged in the wheel 11 a of the generator shaft 26 supply the energy required by the system.

The torque transferred from the wheels 25a to the wheel 11a of shaft 26 of the generator 17 increases continuously at the below mentioned discreet stages:

In a first stage, wherein wheels 10 being engaged with wheels 9 result in the increase of torque in the shafts 19 of wheels 9 ― 9a, as the wheels 9a move around the circumference of the first fixed ring 6 and they simultaneously perform a rotation around their own axis.

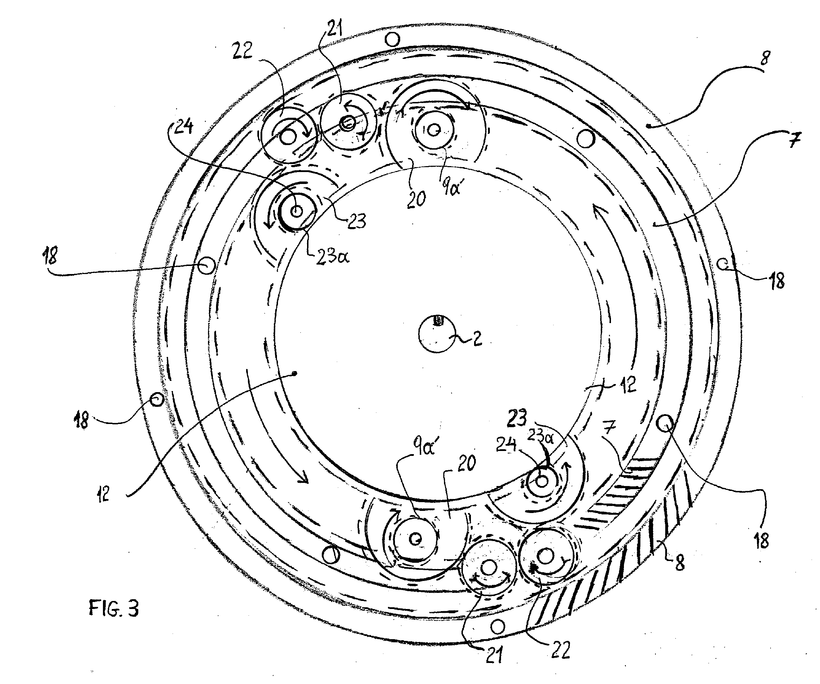

In a second stage, wherein the torque increases further as it is transferred by wheels 9a' and 20 that lie above the wheels 9-9a along the same axis with the latter to wheels that are engaged with the third fixed ring with internal denture 8. Concretely, as it is portrayed in Fig. 3, wheels 9a', having the same diameter as the wheels 9a, are engaged to the second internally toothed fixed ring 7 and move around the circumference thereof, thereby providing the torque increased during the second stage to the overlying wheels of bigger diameter 20. In the perimeter of wheels 20 are engaged free toothed wheels 21 that transfer the motion in the wheels 22 that have the same diameter and move around the circumference of the third internally toothed fixed ring 8, providing a resultant still further increased torque.

In the same time the motion is transferred by wheels 22 in wheels 23 of multiple diameter engaged therein and from these wheels in overlying coaxial wheels 23a of smaller diameter that are engaged and move around the circumference of the wheel 12 that is externally toothed and fixedly mounted onto the cover 15 of the device of the invention. In this manner, the torque is still further increased. Such enhanced torque is transferred on the one hand to the wheel 11a that is mounted onto the shaft 26 of the generator and on the other hand it is returned via suitable transmission means in the input of the system in the abovementioned first flywheel 3.

The device of the invention was tried in operation by the Swedish company VÄSTKUSTKRAFT AB.

The measuring instrumentation used in the test was equipped with an electric motor, of the asynchronous 3-phase and of a nominal capacity 2.25 kVA type. The motor was connected in series with an on-off switch and starter with a three phase durable adjustable resistor of 3.0 kVA.

The electric energy was supplied through a suitable voltage potentiometer with a safety fuse 3X20 A, connected through a D form quadrapolar conductive wire. A single phase synchronous self magnetized generator of an optimum capacity of 1.5 KVA at 3000 revs was mounted onto the output shaft.

The output was measured with a single phase measurement of the current in two phases and then a measurement of the voltage was carried out in the same phase and in relation to the non measured phase. In this way the measuring instrument showed the total resultant work produced as a sum of the active and idle condition, i.e. Wₜₒₜₐₗ =W₁+W₂. The Measurement was carried out only in the engine, not including the rheostatic resistance.

The measuring instrument Fluke 43 was used for the recordal of voltage and current. This instrument records these parameters, as well as the frequency and the intermediate - transitory produced parameters and it displays all the electric parameters, that are essential and relevant in the framework of the measurement and specific order to the testing company VÄSTKUSTKRAFT AB.

The measurement was carried out with the following means and equipment:

| | |
|---|---|
| Resultant energy | Fluke 41 B |
| | |
| Supplement in the input voltage | Beckman T 110 B |
| | |
| Resultant output, energy, sinusoidal wave, as well as intermediate-transitory parameters and voltage, as well as recording of revs | Fluke 43 |
| | |
| Supplement in the output voltage | Fluke 87 |

The processing of the values obtained from the measuring instruments Fluke 41B and Fluke 43 was carried out with the help of a computer.

During measurements values were recorded for the voltage, the current, the sinusoidal wave and the frequency. All abovementioned parameters were recorded at different revs, both as input and output of the device, and were afterwards processed and compared with the help of a computer.

The instrument was put in operation and measurements were carried out three times. It was the third time that the maximum revs amounting to 95% of the nominal value at 50 Hz was recorded in the resulting output. This corresponds in a number of revs at the generator of the order of 2.850 rpm.

The device did not present any problem during these measurements, but the number of revs was decreased for the sake of safety of those present and for avoiding damages being produced in the invented device.

### 1st measurement

The device was put in operation, but the measurement stopped after 17 seconds as the frequency of 28.8 Hz was reached, in order to correct a calibration problem encountered with the measuring instrument FLUKE 43.

### 2nd measurement

The device was put in operation and the number of revs was continuously increased up to a value close to approximately 95% of the total number of revs that could be reached by a synchronous generator. At a value of approximately 62% of the nominal number of revs a voltage was measured at the generator that started to supply energy to the load imposed to the device. This was manifested more clearly when the noise of the instrument became more intense.

The rheostatic resistance was regulated also for higher voltage values, so that the number of revs would not need to be decreased. The first measurement was recorded at the 89% of the total number of revs. At the 95% of the total number of revs of the generator, the power produced was logarithmically increased and it was at this rpm value that 0.77 kW was produced. The power supplied at this instant was 0.77 kW. Such measurement is remarkable of course if one takes into account the expected losses of the device itself.

This remarkable result led to the decision to interrupt operation of the device after 28 seconds, in order to check for one more time the means and equipment employed in the measurement. However no worth of mentioning causes that could have influenced the measurements could be found.

### 3rd measurement

The device entered in operation, the number of revs was increased and energy was produced by the generator.

At a value of 95% of the total number of revs of the generator, the power produced by the generator was 0.92 kW at cosϕ 1.0. The power input at this particular moment was 0.88 kW.

The measurement lasted 94 seconds, as long as it was judged advisable in order to avoid any danger for those present in the test procedure. The 95% of the total number of revs was kept constant for a period of 32 seconds. Throughout these 32 seconds the power output was higher than the power input.

It should hereby be noted that the description of the proposed device and method of operation thereof was made by reference to illustrative embodiments, in which it is not limited. Thus, any change or modification regarding the shape, size, form, arrangement and number of accessories used, dimensions, materials and elements used in the manufacture, assembly and operation, as long as they do not constitute a new inventive step and do not contribute in the technical development of what is already known, must be considered part of the aims and scope of the present invention.

## Claims

1. Mechanism for the production of energy **characterized by** that its operation is based in the simultaneous exploitation of an action exerted on a system and of the reaction being associated with that action, wherein the proposed mechanism receives an in initial power input and is capable of producing energy with a controlled and adjustable with an absolute accuracy at a desired predetermined level, torque and power output at a shaft (26) of a generator supplying energy for consumption, said mechanism comprising a plurality of discreet stages arranged longitudinally along and around the perimeter of a fixedly mounted central shaft (2) extending from a bottom basement (1) to a top cover (15), wherein each one of said discreet stages comprises a system of fixed and movable toothed wheels that engage one to the other, certain ones of said fixed and movable toothed wheels performing a rotation around their own axis whilst in the same time performing a rotation around fixed internally toothed perimetrically arranged rings, thereby producing through conversion of the reaction produced to action and given suitable correlation of diameters, a gradually increasing output torque.

2. Mechanism for the production of energy according to the above claim 1, **characterized by** that it comprises three sequential flywheel units (3), (4), (5) fixedly mounted by means of pillars (18) from the bottom basement (1) to the upper cover (15) thereof, three rings (6), (7) and (8) being accordingly mounted, again from the bottom to the top, said three rings having progressively increasing diameters, so that the diameter of fixedly mounted ring (8) is bigger than that of ring (7) and the diameter of ring (7) is bigger than that of ring (6), wherein all three rings (6), (7) and (8) are provided with a circumferential internal toothing and are respectively engaged to planet wheels (9a), (9a') and (22), said planet wheels performing a rotation around themselves whilst proceeding around the perimeter of said rings (6,7,8), thereby producing a gradually and continuously increasing torque that they transfer towards the central shaft (2) of the mechanism whereupon is mounted said shaft (26) of the energy producing generator (17).

3. Mechanism for the production of energy according to the above claim 2, **characterized by** that equidistantly spaced pairs of toothed wheels (9a), (9a') and (22) respectively are mounted at the perimeter of each one of said rings (6,7,8).

4. Mechanism for the production of energy according to the above claim 3, **characterized by** that said equidistantly spaced pairs of toothed wheels (9a), (9a') and (22) respectively mounted at the perimeter of each one of said rings (6,7,8) are two antidiametrically located pairs, the distance in between them corresponding to an arc of 180°.

5. Mechanism for the production of energy according to the above claim 3, **characterized by** that said equidistantly spaced pairs of toothed wheels (9a), (9a') and (22) respectively mounted at the perimeter of each one of said rings (6,7,8) are three circumferentially located pairs, the distance in between them corresponding to an arc of 120°.

6. Mechanism for the production of energy according to the above claims 1-5, **characterized by** that it comprises transmission means of the movement of an uppermost wheel (11a) connected to the shaft (26) of generator (17) wherein is obtained the maximum value of the gradually increasing torque to a lowest said first flywheel (3) corresponding to the input to the system, so as to eliminate, following employment of brake means for adjustment of the desired rpm of the mechanism, needed initial input to the power supplying motor.

7. Method for the production of energy based in the simultaneous exploitation of an action exerted on a system and of the reaction being associated with that action, wherein the proposed method receives an in initial power input and is capable of producing energy with a controlled and adjustable with an absolute accuracy at a desired predetermined level, torque and power output at a generator supplying energy for consumption, wherein is employed a mechanism for the production of energy as claimed in any of the above claims 1-6.
